Europäisches Patentamt

European Patent Office

Office européen des brevets

(19)

(11) **EP 0 706 143 B1**

(12) **FASCICULE DE BREVET EUROPEEN**

(45) Date de publication et mention
de la délivrance du brevet:
**11.09.2002 Bulletin 2002/37**

(51) Int Cl.$^7$: **G06G 7/26**

(21) Numéro de dépôt: **95115575.3**

(22) Date de dépôt: **02.10.1995**

(54) **Contrôleur à logique floue de type analogique**

Analoger Fuzzy-Regler

Analogue fuzzy logic controller

(84) Etats contractants désignés:
**DE FR GB NL**

(30) Priorité: **06.10.1994 FR 9411957**

(43) Date de publication de la demande:
**10.04.1996 Bulletin 1996/15**

(73) Titulaire: **CSEM**
**Centre Suisse d'Electronique et de**
**Microtechnique S.A.**
**2007 Neuchâtel (CH)**

(72) Inventeur: **Landolt, Olivier**
**CH-2000 Neuchâtel (CH)**

(74) Mandataire: **Patry, Didier Marcel Pierre et al**
**I C B,**
**Ingénieurs Conseils en Brevets S.A.**
**Rue des Sors 7**
**2074 Marin (CH)**

(56) Documents cités:
- **PATENT ABSTRACTS OF JAPAN vol. 018 no.**
  **014 (P-1672) ,11 Janvier 1994 & JP-A-05 250500**
  **(SHARP CORP) 28 Septembre 1993,**
- **PROCEEDINGS OF THE TWENTY-FIRST**
  **INTERNATIONAL SYMPOSIUM ON**
  **MULTIPLE-VALUED LOGIC (CAT.**
  **NO.91CH3009-8), VICTORIA, BC, CANADA,**
  **26-29 MAY 1991, ISBN 0-8186-2145-1, 1991, LOS**
  **ALAMITOS, CA, USA, IEEE COMPUT. SOC.**
  **PRESS, USA, pages 356-362, SASAKI M ET AL**
  **'A fuzzy logic function generator (FLUG)**
  **implemented with current mode CMOS circuits'**

**Description**

La présente invention concerne un contrôleur à logique floue prévu pour mettre en oeuvre un ensemble de règles de comportement afin de fournir les valeurs d'un ensemble de variables de sortie en fonction de valeurs d'un ensemble de variables d'entrée.

La présente invention concerne plus particulièrement un contrôleur à logique floue du type décrit ci-dessus réalisé sous la forme d'un circuit analogique intégré.

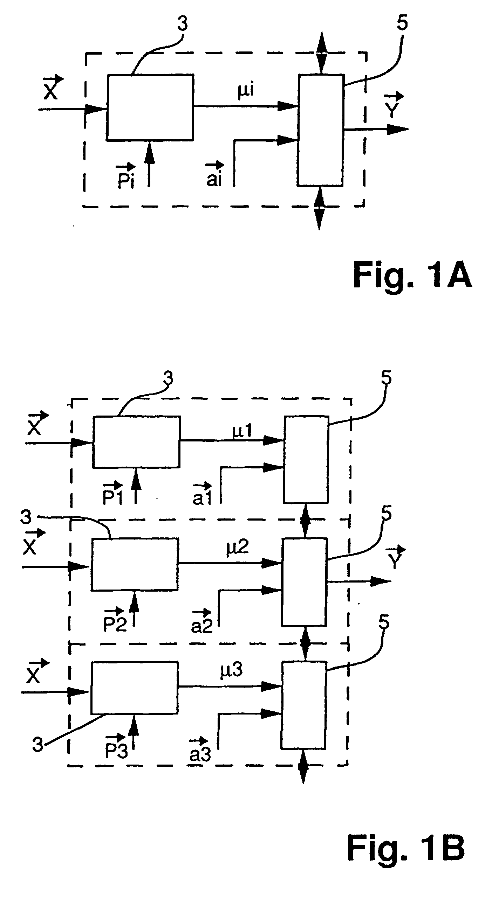

On connait déjà des contrôleurs qui fonctionnent en mettant en oeuvre des règles floues de comportement. On peut représenter conceptuellement une règle floue par un bloc fonctionnel comme celui qui est illustré à la figure 1A.

La règle représentée à la figure 1A possède un certain nombre d'entrées référencées $x_k$ et un certain nombre de sorties référencées $y_j$. Ces entrées et ces sorties forment respectivement les composantes d'un vecteur d'entrée noté $\vec{X}$ et d'un vecteur de sortie noté $\vec{Y}$. Un contrôleur à logique floue met toujours conjointement en oeuvre un ensemble de règles, et toutes les règles de l'ensemble possèdent en général les mêmes entrées et les mêmes sorties. La figure 1B représente de façon fonctionnelle un contrôleur à logique floue mettant en oeuvre un ensemble de trois règles.

Un contrôleur à logique floue comporte des premiers moyens, représentés par un ensemble de blocs référencés 3, qui servent à déterminer, pour chacune des règles mises en oeuvre, un degré de vérité global. Ce degré de vérité global est désigné par $\mu_i$, l'indice i prenant les valeurs 1, 2 et 3 sur la figure 1A. Le degré de vérité global d'une règle floue est, concrètement, une mesure du degré de similitude entre les valeurs prises par les composantes $x_k$ du vecteur d'entrée $\vec{X}$ et des valeurs de référence $p_{ik}$ propres à la règle.

Un contrôleur à logique floue comporte encore des deuxièmes moyens, représentés par un ensemble de blocs référencés 5, qui déterminent les valeurs de sorties $y_j$ en combinant des valeurs prédéterminées $a_{ij}$ et le degré de vérité global $\mu_i$ qui sont associés à une règle avec les valeurs correspondantes associées aux autres règles. Les valeurs prédéterminées $a_{ij}$ associées à une règle particulière forment les composantes d'un vecteur $\vec{a_i}$ et l'opération mise en oeuvre pour effectuer la combinaison des vecteurs $\vec{a_1}$ est, dans le cas le plus courant, le calcul d'un centre de gravité des $\vec{a_i}$ où l'on attribue à chaque $\vec{a_1}$ le poid $\mu_i$.

Globalement, la mise en oeuvre d'un ensemble de règles associées permet de définir région par région une fonction non linéaire $\vec{y}(\vec{x})$. En effet, chaque règle spécifie la valeur prise par le vecteur de sortie $\vec{y}$ lorsque le vecteur d'entrée $\vec{x}$ est proche du vecteur $\vec{p_i}$ qui est constitué par les valeurs de référence $p_{ik}$ de la règle.

Les questions abordées ci-dessus sont connues de l'homme du métier et on pourra obtenir des explications plus détaillées en se référant aux nombreuses publications traitant de la logique floue. On trouve notamment une introduction à la logique floue dans le mensuel "La Recherche" - D. Dubois, H. Prade, LA RECHERCHE, 1308, <u>22</u>, (1991).

Bien que le mode de fonctionnement du contrôleur selon la présente invention pourrait être décrit sans faire référence à la logique floue, nous utiliserons le vocabulaire et les concepts communément associés à ce formalisme pour décrire son fonctionnement.

Les règles de comportement mises en oeuvre avec la logique floue sont essentiellement qualitatives, et sont exprimées généralement en langage naturel par un énoncé du type "SI condition ALORS conclusion" ou sous forme tabulaire. L'énoncé d'une règle de comportement comprendra, le plus généralement, plusieurs conditions et pourra se présenter sous une forme du type "SI X est A ET Y est B ALORS Z est C" ou du type "SI X est A OU Y est B ALORS Z est C" ou encore sous la forme d'une expression complexe obtenue par combinaison des deux formes ci-dessus. Les symboles A, B et C sont ici des termes linguistiques.

Pour simuler ou commander un système physique à l'aide de règles floues, il est nécessaire de transposer celles-ci en expressions mathématiques évaluables numériquement et telles que la dynamique du système ainsi décrit corresponde de façon satisfaisante à l'idée que peut s'en faire un être humain à partir des règles du langage usuel. Sur le plan théorique, cette transposition en termes quantitatifs peut se faire à l'aide du formalisme des ensembles flous et de la logique floue. Un ensemble flou permet la représentation commode des valeurs plus ou moins compatibles avec une des conditions d'une règle floue. Un ensemble flou A se caractérise par une fonction d'appartenance $\mu A(X)$ pouvant prendre des valeurs comprises entre 0 et 1. La fonction $\mu A(X)$ est le degré de compatibilité de la valeur prise par la variable d'entrée X avec la condition "X est A" ou, en d'autres termes, $\mu A(X)$ est le degré de vérité de l'affirmation "X est A".

Dans le cas où une règle comprend plusieurs conditions, on détermine le degré de vérité global de cette règle en combinant entre eux les degrés de vérité de chacune des conditions. Cette opération de combinaison des degrés de vérité, c'est à dire des fonctions d'appartenance, peut être réalisée à l'aide d'opérateurs de la logique floue. L'opérateur MIN et l'opérateur MAX correspondent respectivement aux termes du langage naturel "ET" et "OU", et sont de loin les plus couramment utilisés. Cependant, d'autres opérateurs ont été définis en théorie, et peuvent être appliqués pour combiner des fonctions d'appartenance.

La plupart des dispositifs connus sont construits autour d'un micro-processeur numérique. Ces contrôleurs numériques évaluent le degré de vérité global d'une règle à l'aide d'algorithmes qui reproduisent fidèlement la méthode fournie par le formalisme de la logique floue.

Des descriptions de contrôleurs analogiques à logique floue ont également été publiées, on peut citer notamment l'article de M. Sasaki et F. Ueno, "A fuzzy logic function generator (FLUG) implemented with current mode CMOS circuits" Proc. 21st Int. Symposium on multiple valued logic, 1991. Le fonctionnement des contrôleurs analogiques connus est basé sur une traduction immédiate de l'algorithme de base utilisé avec des dispositifs numériques.

Les contrôleurs analogiques à logique floue comme ceux qui viennent d'être décrits présentent des défauts. En effet, les opérateurs habituellement utilisés pour évaluer le degré de vérité global d'une règle constituent des circuits relativement complexes lorsqu'ils sont réalisés sous forme analogique. En conséquence, d'une part, ces circuits occupent une surface importante lorsqu'ils sont intégrés sur une puce et, d'autre part, ils consomment une puissance considérable.

Un exemple de réalisation d'opérations pour évaluer le degré de vérité global d'une règle de comportement est décrit dans la demande de brevet japonais JP A-05-250500. Le circuit intégré à logique floue de cette demande comprend des premiers moyens de fourniture d'un courant représentatif du degré de vérité global et des seconds moyens de détermination des valeurs d'au moins une variable de sortie en fonction du courant des premiers moyens. Une unique règle de comportement à plusieurs conditions est décrite pour fournir une valeur de variable de sortie.

Pour ce faire, en référence à la figure 1 de ce document, un dipôle résistif composé d'au moins deux transistors QP1 et QP2 en parallèle est connecté à une résistance R1 liée à une borne positive d'alimentation. Un circuit d'évaluation du degré de vérité commande la grille de chaque transistor QP1 et QP2 afin de fournir un courant en combinaison avec la résistance R1 dont l'intensité définit le degré de vérité global de la règle. Un transistor QN1 connecté à la masse reçoit le courant des premiers moyens pour le miroiter par le biais d'un transistor QN2 dans une branche de sortie. La valeur de variable de sortie est obtenue par le courant miroité passant par un transistor QP3 monté en diode en série avec une résistance R2 connectée à la borne positive.

Cet agencement a l'inconvénient de ne prévoir qu'une variable de sortie en fonction du courant dont l'intensité définit le degré de vérité global obtenu par les opérateurs QP1, QP2 liés à la résistance R1. De plus, le courant déterminé en partie par la résistance R1 a l'inconvénient de ne pas être précis notamment lors du changement de température.

Un but de la présente invention est donc de remédier aux inconvénients de l'art antérieur. Elle atteint ce but en fournissant un contrôleur à logique floue de type analogique prévu pour, par la mise en oeuvre d'un ensemble de règles de comportement et en fonction des valeurs prises par un ensemble de variables d'entrée, fournir les valeurs d'un ensemble de variables de sortie, chacune desdites règles de comportement s'énonçant comme d'une part une conclusion consistant en l'association de valeurs prédéterminées avec au moins une partie desdites variables de sortie et d'autre part une expression logique floue formée d'une ou de plusieurs conditions reliées entre elles par des opérateurs logiques, lesdites conditions consistant chacune en une relation d'ordre entre une desdites variables d'entrée et une valeur de référence, ledit contrôleur déterminant les valeurs desdites variables de sortie en combinant lesdites valeurs prédéterminées des conclusions des différentes règles, les valeurs prédéterminées de chacune desdites conclusions étant pondérées en tenant compte d'un degré de vérité global de l'expression logique floue correspondante, ledit degré de vérité global étant déterminé par combinaison des degrés de vérité respectifs des conditions figurant dans ladite expression floue et ledit degré de vérité d'une condition étant maximum lorsque ladite condition est strictement vérifiée et nul lorsque ladite condition est considérée comme non vérifiée; ledit contrôleur comprenant :

- des premiers moyens pour fournir pour chaque règle un courant dont l'intensité est représentative du degré de vérité global de l'expression logique floue de ladite règle, lesdits premiers moyens comprenant des bipôles résistifs constitués, chacun, d'un ensemble d'éléments résistifs interconectés en série et/ou en parallèle, la configuration des interconnexions desdits éléments résistifs dans un bipôle étant déterminée par la nature des opérateurs logiques ("ET", "OU") présents dans l'expression logique floue de la règle associée audit bipôle, et des circuits d'évaluation du degré de vérité d'une condition, chacun desdits circuits d'evaluation, étant prévu pour commander la conductance d'un desdits éléments résistifs, et
- des deuxièmes moyens pour déterminer les valeurs desdites variables de sortie à partir desdites intensités des courants fournis par lesdits premiers moyens pour les différentes règles;
  selon une première variante, le contrôleur étant caractérisé en ce que les premiers moyens comportent :
- un réseau de bipôles résistifs en parallèle, ledit réseau étant disposé en série avec une source de courant et chacun desdits bipôles étant associé à une desdites règles, les circuits d'évaluation, commandant la conductance des éléments résistifs de chaque bipôle, étant prévus de manière que les intensités relatives des courants circulant dans les différentes branches dudit réseau d'éléments résistifs reflètent la distribution des degrés de vérité globaux des différentes règles,
  et en ce que les deuxièmes moyens comportent :
- un nombre donné de lignes collectrices,

- pour chaque règle, un circuit diviseur de courant comportant ledit nombre donné de bras, chacun desdits bras recevant une part égale du courant fourni par lesdits premiers moyens, et lesdits bras sélectionnés étant reliés, chacun, à une des lignes collectrices respectives, ladite sélection de bras exprimant lesdites valeurs prédéterminées figurant dans la conclusion de ladite règle.

Selon une deuxième variante, le contrôleur est caractérisé en ce que lesdits premiers moyens comportent:

- un réseau de bipôles résistifs en série, ledit réseau étant disposé en parallèle avec une source de tension et chacun desdits bipôles étant associé à une desdites règles, les circuits d'évaluation, commandant la conductance des éléments résistifs de chaque bipôle, étant prévus de manière que les valeurs relatives des tensions aux bornes des différentes branches dudit réseau d'éléments résistifs reflètent la distribution des degrés de vérité globaux des différentes règles,
  et en ce que les deuxièmes moyens comportent :
- un nombre donné de lignes collectrices,
- pour chaque règle, un circuit diviseur de courant comportant ledit nombre donné de bras, chacun desdits bras recevant une part égale du courant fourni par lesdits premiers moyens, et lesdits bras sélectionnés étant reliés, chacun, à une des lignes collectrices respectives, ladite sélection de bras exprimant lesdites valeurs prédéterminées figurant dans la conclusion de ladite règle.

D'autres modes de réalisation selon l'invention sout spécifiés dans les revendications dépendantes attenantes.

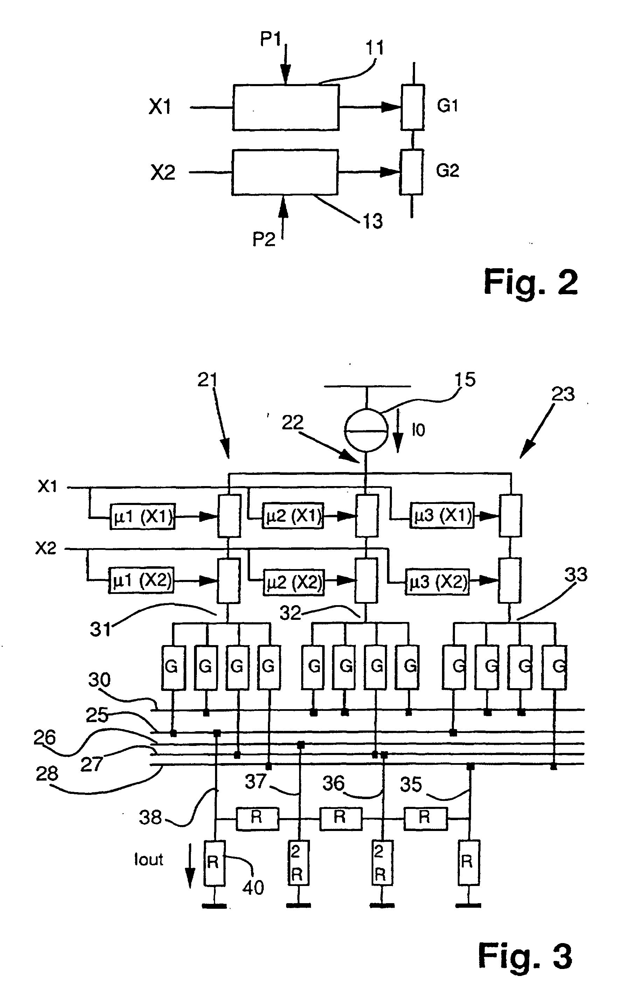

Afin de faciliter la compréhension de l'objet de la présente invention, nous allons tout d'abord nous reporter à la figure 2 qui représente deux éléments résistifs en série référencés respectivement G1 et G2. La conductance de chacun de ces éléments résistifs est commandée par un circuit d'évaluation du degré de vérité d'une condition. Les deux circuits d'évaluation du degré de vérité, ou autrement dit, de la fonction d'appartenance, sont symbolisés par des boîtes rectangulaires qui sont respectivement référencées 11 et 13. Chacun des circuits d'évaluation est prévu pour effectuer une comparaison entre la valeur d'un signal d'entrée $x_k$ et une valeur de référence. En fonction du résultat de cette comparaison, le circuit d'évaluation fait varier la conductance d'un élément résistif. La conductance est prévue pour être sensiblement nulle lorsque la valeur d'entrée est très différente de la valeur de référence, pour augmenter continûment lorsque les deux valeurs se rapprochent et pour atteindre un maximum lorsque les deux valeurs sont identiques.

Si l'on note $G_1$ et $G_2$ les valeurs des deux conductances, la conductance équivalente à ces deux conductances en série est donnée par :

$$G = \frac{1}{1/G_1 + 1/G_2} = \frac{G_1 \cdot G_2}{G_1 + G_2}$$

Parmi les propriétés de cette équation, on peut noter que G est environ égal à $G_1$ quand $G_1$ est nettement plus faible que $G_2$. Il existe donc une certaine similitude entre la fonction $MIN(G_1,G_2)$ et la fonction ci-dessus. On comprendra donc que le circuit extrêmement simple de la figure 2 peut réaliser une mesure vectorielle de similitude entre un vecteur d'entrée et un vecteur de référence d'une règle de comportement à deux entrées. Selon le formalisme de la logique floue, la fonction G ci-dessus correspond, dans le langage usuel, au terme "et". On verra plus loin que la présente invention permet également de mettre en oeuvre des règles dont les conditions sont reliées par le terme "ou".

Un avantage de la présente invention est sa faible consommation. En effet, conformément à la présente invention, il ne circule du courant que dans les branches du réseau d'éléments résistifs qui correspondent aux règles dont le degré de vérité global n'est pas nul.

Un autre avantage est que, les signaux étant représentés par des courants, un contrôleur selon la présente invention peut fonctionner à très basse tension.

Un autre avantage de la présente invention est que les valeurs de sortie associées aux règles étant représentées sous une forme essentiellement binaire (la sélection ou non d'un bras), il est possible de réaliser, par exemple, des circuits facilement programmables ou des circuits spécialisés en pré-programmant les valeurs prédéterminées sous forme de courts-circuits sur l'un des masques conducteurs.

D'autres caractéristiques et avantages de la présente invention apparaîtront au cours de la description qui va suivre, donnée uniquement à titre d'exemple et faite en se référant aux dessins annexés dans lesquels :

- la figure 1A est un bloc fonctionnel représentant conceptuellement une règle de comportement floue;

- la figure 1B représente de façon fonctionnelle un exemple de contrôleur à logique floue mettant en oeuvre conjointement trois règles de comportement;
- la figure 2 est une représentation partielle d'un réseau d'éléments résistifs prévu pour mettre en oeuvre une mesure de similitude entre un vecteur d'entrée et un vecteur de référence d'une règle de comportement à deux entrées.
- la figure 3 est le schéma de principe d'un premier mode de réalisation d'un contrôleur selon la présente invention;
- la figure 4A est un schéma d'un premier mode de réalisation d'un réseau de dipôles résistifs conforme à la présente invention et identique à celui qui est représenté sur la figure 3;
- la figure 4B est un schéma d'un deuxième mode de réalisation d'un réseau de dipôles résistifs conforme à la présente invention;
- la figure 5 est une représentation partielle des deuxième moyens du contrôleur de la figure 3 montrant les lignes collectrices et le circuit à embranchements;
- la figure 6 est une représentation partielle des deuxièmes moyens du contrôleur de la figure 3 montrant les moyens pour réaliser une somme pondérée des courants conduits par les lignes collectrices;
- la figure 7 est un schéma électronique d'un deuxième mode de réalisation de la présente invention;

La figure 3 représente de façon schématique, à titre d'exemple, un premier mode de réalisation du contrôleur selon la présente invention. Dans cette exemple, le contrôleur est prévu pour mettre en oeuvre trois règles comportant chacune deux conditions reliées par l'expression ET.

On voit tout d'abord que le contrôleur comporte six circuits d'évaluation d'une fonction d'appartenance, c'est à dire un circuit d'évaluation d'une fonction d'appartenance par condition. Sur la figure 3, on a représenté les circuits d'évaluation par des boîtes rectangulaires référencées respectivement $\mu_1(x_1)$, $\mu_2(x_1)$, $\mu_3(x_1)$, $\mu_1(x_2)$, $\mu_2(x_2)$ et $\mu_3(x_2)$. Chacun des circuits d'évaluation est prévu pour évaluer la fonction d'appartenance en effectuant une comparaison entre, d'une part, un signal d'entrée ( soit $x_1$ soit $x_2$) et, d'autre part, une valeur de référence. La fonction d'appartenance est nulle lorsque la valeur d'entrée est très différente de la valeur de référence, augmente continûment lorsque les deux valeurs se rapprochent et atteint un maximum lorsque les deux valeurs sont identiques.

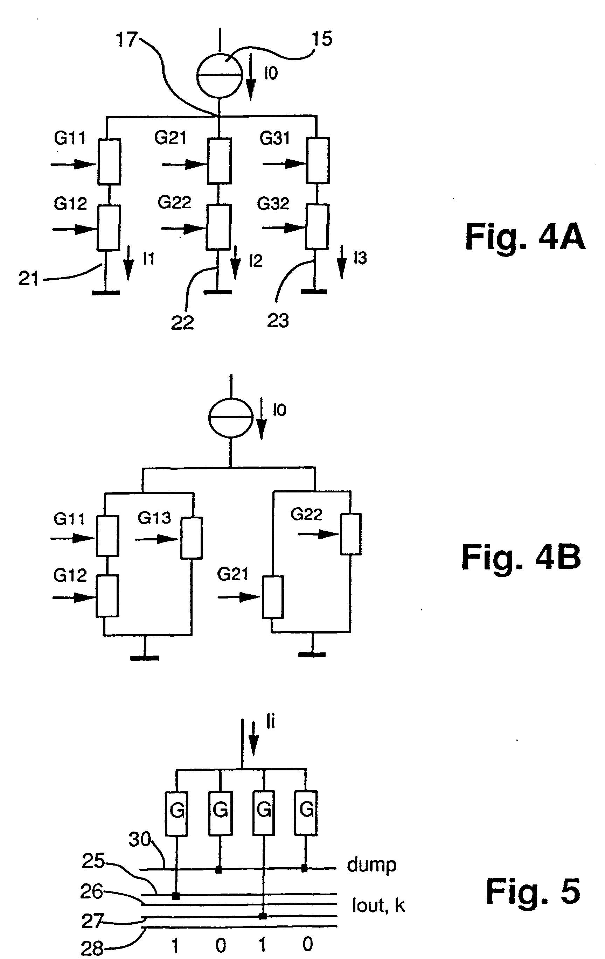

Le contrôleur comporte, d'autre part, une source de courant référencée 15 reliée en série avec un réseau formé d'éléments résistifs à conductance variable référencés respectivement $G_{11}$, $G_{21}$, $G_{31}$, $G_{12}$, $G_{22}$ et $G_{32}$ (voir figure 4A). Le réseau d'éléments résistifs est formé de trois branches parallèles, référencées respectivement 21, 22 et 23, et qui comportent, chacune, deux éléments résistifs en série. Chaque paire d'éléments résistifs en série est associée aux deux conditions d'une règle. Chaque élément résistif est, de plus, prévu pour être commandé par un des circuits d'évaluation d'une fonction d'appartenance de manière à ce que sa conductance soit nulle lorsque la fonction d'appartenance est nulle et que sa conductance soit maximum lorsque la fonction d'appartenance est maximum.

Les éléments de circuit de la figure 3 qui viennent d'être décrits constituent un exemple de réalisation des premiers moyens qui sont revendiqués par la présente invention et qui sont prévus pour fournir, pour chaque règle, un courant représentatif du degré de vérité global de ladite règle. Dans le but de faciliter la compréhension de l'invention, la figure 4A reprend isolément les éléments de la figure 3 qui constituent les premiers moyens ci-dessus.

On voit sur la figure 4A que la source de courant 15 est connectée à un noeud 17 par l'intermédiaire duquel elle alimente en courant les trois branches 21, 22 et 23 du réseau d'éléments résistifs à conductance variable. Dans ces conditions, si l'on désigne par $G_i$ la conductance équivalente de la branche i (soit la branche 21, soit la branche 22, soit la branche 23) l'intensité $I_i$ du courant traversant cette branche est donné par :

$$I_i = \frac{G_i}{\sum\limits_i G_i} \cdot I_0$$

D'autre part, comme on l'a vu plus haut, l'effet sur la conductance totale d'une branche $G_i$ de la mise en série de deux éléments résistifs est semblable à l'effet de l'opérateur flou "ET" sur deux fonctions d'appartenance. La distribution des courants $I_i$ entre les branches reflète donc la répartition des degrés de vérité globaux ou, autrement dit, des poids entre les différentes règles. Cette répartition des poids étant toutefois normalisée de manière à ce que la somme des poids reste constante.

Le raisonnement que nous venons de faire sur la distribution des courants dans les trois branches du réseau résistif n'est correct qu'à condition que les extrémités de ces branches soient toutes trois à la masse ou tout au moins au même potentiel. Dans le mode réalisation de la figure 3, la condition ci-dessus est virtuellement respectée si les douze éléments résistifs identiques qui sont référencés G et qu'on peut voir immédiatement en aval du réseau résistif, ont une conductance beaucoup plus élevée que les conductances variables du réseau résistif.

Nous venons de décrire, à l'aide de la figure 4A, un exemple de réalisation d'un réseau résistif prévu pour fournir trois courants dont les intensités sont représentatives des degrés de vérité ou poids de trois règles. Selon la présente invention, le contrôleur à logique floue comporte encore des moyens pour déterminer la valeur des variables de sortie à partir des courants fournis par le réseau résistif. Avant de décrire ces derniers moyens, nous allons rapidement décrire un deuxième exemple de réseau résistif en nous référant à la figure 4B. Le réseau résistif de la figure 4B est prévu pour mettre en oeuvre deux règles comportant des conditions reliées par le terme "OU".

Dans le cas où l'expression logique floue contenant les conditions d'une règle comporte entre certaines de ces conditions des termes "OU", les éléments résistifs associés à une règle ne sont pas tous en série. La figure 4B représente un exemple de moyens pour fournir deux courants dont les intensités sont représentatives des poids de deux règles comportant respectivement une expression logique floue de la forme :

$$(x_1 = a_{11} \text{ ET } x_2 = a_{12}) \text{ OU } x_3 = a_{13}$$

et une expression logique floue de la forme :

$$x_1 = a_{21} \text{ OU } x_2 = a_{22}$$

Dans le réseau résistif de la figure 4B comme dans celui de l'exemple précédent, les éléments résistifs correspondant aux différentes conditions d'une même règle sont interconnectés de manière à former un seul bipôle résistif ou, en d'autres termes, une seule branche du réseau d'éléments résistifs. Toutefois, contrairement à ce qui était le cas dans l'exemple de la figure 4A, dans la figure 4B, certains des éléments résistifs associés à une même règle sont reliés en parallèle. En effet, dans un même bipôle, les connexions en parallèle correspondent aux termes "ou" et les connexions en série aux termes "et".

Les figures 4A et 4B qui viennent d'être décrites représentent respectivement deux réseaux résistifs comportant chacun un réseau de bipôles résistifs en parallèle, ce dernier réseau étant disposé en série avec une source de courant. L'homme du métier comprendra, toutefois, que dans d'autres modes de réalisation de la présente invention, chacun de ces circuits pourrait être remplacé par son circuit dual. Dans ces conditions, un réseau résistif comporterait un réseau de bipôles résistifs en série, ce dernier réseau étant disposé en parallèle avec une source de tension.

Nous allons maintenant nous intéresser à nouveau à la variante du contrôleur qui est représentée à la figure 3. Cette variante comporte des moyens selon l'invention pour déterminer la valeur des variables de sortie en fonction des courants fournis par le réseau résistif.

On voit sur la figure 3 que chacune des branches 21, 22 et 23 du réseau résistif est reliée à quatre lignes collectrices de signaux référencées respectivement 25, 26 27 et 28 et à un collecteur de masse (ou ligne "dump") référencé 30. La connexion entre chacune des branches du réseau résistif et les lignes collectrices est réalisée par l'intermédiaire d'un circuit diviseur de courant. Dans le présent exemple, chacun des circuits diviseurs de courant comprend quatre bras de conductance égale qui sont reliés ensemble à une des sorties du réseau résistif. Les trois circuits diviseurs de courant sont respectivement référencés 31, 32 et 33.

Afin de faciliter la compréhension, nous allons maintenant nous intéresser à la figure 5 qui représente isolément un des trois circuits diviseurs de courant de la figure 3 et les interconnexions de celui-ci avec les quatre lignes collectrices 25, 26, 27 et 28 et avec la ligne "dump" 30.

Le circuit diviseur de courant de la figure 5 comporte quatre bras, un pour chacune des lignes collectrices 25, 26, 27 et 28. Dans un mode de réalisation de l'invention, le nombre de lignes collectrices peut être quelconque mais les circuits diviseurs de courant comptent toujours un bras par ligne collectrice.

Comme on le voit sur la figure 5, on a représenté un élément résistif sur chacun des quatre bras du circuit diviseur de courant. Ces éléments résistifs sont tous référencés par la lettre G et ont, de plus, tous la même conductance. Chaque bras du circuit diviseur de courant ayant la même conductance, le circuit diviseur de courant divise le courant fourni par une branche du réseau résistif en quatre parts égales, pour autant que les potentiels des lignes collectrices soient égaux.

Chaque bras du circuit diviseur de courant est associé à une des lignes collectrices mais est prévu pour être relié soit à cette ligne collectrice soit à la ligne "dump". Concrètement, sur la figure 5, le premier bras depuis la gauche du circuit diviseur de courant est associé avec la ligne collectrice 25 à laquelle il est relié, le deuxième bras est associé avec la ligne 26 mais ne lui est pas relié, le troisième bras est associé avec la ligne 27 à laquelle il est relié et, enfin, le dernier bras est associé avec la ligne 28 mais ne lui est pas relié.

Le fait de connecter ou de ne pas connecter les bras du circuit diviseur de courant aux lignes collectrices revient à attribuer à chaque bras une valeur binaire 1 ou 0 que l'on notera $c_k$. Un circuit diviseur de courant à quatre bras est donc caractérisé par un mot de quatre bits. Par exemple, le mot de quatre bits caractérisant le circuit diviseur de courant de la figure 5 est 1010.

Si on se réfère à nouveau au schéma de la figure 3, on voit que les circuits diviseurs de courant associés à chacune des trois règles sont, chacun, caractérisés par un mot binaire différent. Le courant total $I_{out,k}$ fourni par les trois circuits diviseurs de courant à une ligne collectrice k particulière est égal à :

$$I_{out,k} = \sum_i C_{ik} \, 1/N \, I_i = 1/N \sum_i C_{ik} \, I_i = \frac{I_o}{N} \cdot \frac{\sum_i C_{ik} \cdot G_i}{\sum_i G_i} \; ;$$

N étant le nombre de bras des diviseurs de courant

Le courant $I_i$ étant égal à $I_o \cdot G_i / \sum_i G_i$ le rapport entre, d'une part, le courant total fourni à la $k^{\text{ième}}$ ligne collectrice et, d'autre part, le quart ou, plus généralement, le 1/N du courant total $I_0$ est donc égal au centre de gravité des $c_k$ correspondant aux trois règles et dont les poids sont les poids respectifs des règles.

On comprendra donc que le courant fourni à la $k^{\text{ième}}$ ligne collectrice correspond à l'évaluation de la valeur de sortie globale de trois règles associées ayant chacune pour valeur de sortie unique l'une des valeurs 1 ou 0. De même, les intensités des courants dans les quatre lignes collectrices correspondent aux valeurs de sortie globale pour trois règles associées ayant chacune quatre valeurs de sortie binaires distinctes.

Les quatre valeurs de sortie binaires qui sont déterminées par les connexions du circuit diviseur de courant associé à chaque règle peuvent, selon la présente invention, soit être considérées comme quatre nombres binaires à un bit, soit comme un nombre binaire à quatre bits, soit encore comme deux ou trois nombres binaires de taille intermédiaire.

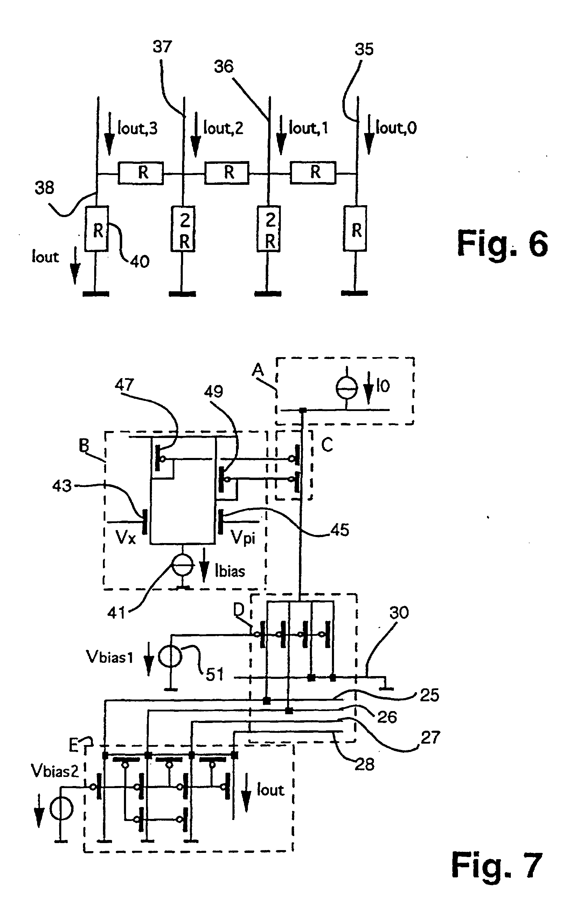

Dans la variante représentée à la figure 3, les valeurs de sortie des trois règles sont, chacune, prises en compte comme étant des nombres binaires à quatre bits. A cet effet, chacune des lignes collectrices 25, 26, 27 et 28 est, sur la figure 3, reliée à une des entrées 35, 36, 37 et 38 d'un deuxième réseau de résistances. Ce réseau, qui constitue un circuit de pondération par puissances de 2 connu en soi, est représenté isolément sur la figure 6.

On voit sur la figure 6 que les quatre entrées du deuxième réseau de résistances correspondent chacune à un noeud. Ces noeuds sont respectivement référencés 35, 36, 37 et 38. Les quatre noeuds sont reliés entre eux par trois résistances ayant toutes la même valeur arbitraire notée R sur la figure, et chacun des noeuds est également relié à la masse par l'intermédiaire d'une résistance ayant soit la valeur R soit la valeur 2R.

Pour faciliter la compréhension de la figure 6, le courant fourni par la ligne collectrice 25 au noeud 38 est indiqué par la référence $I_{out,3}$, le courant fourni par la ligne 26 au noeud 37 est indiqué $I_{out,2}$, le courant fourni par la ligne 27 au noeud 36 est indiqué $I_{out,1}$ et, enfin, le courant fourni par la ligne 28 au noeud 35 est indiqué $I_{out,0}$.

On On s'intéresse maintenant au courant référencé Iout qui circule entre le noeud 38 et la terre à travers la résistance de valeur R qui est référencée 40 sur la figure 6. On peut vérifier facilement que l'intensité de ce courant est égale à:

$$I_{out} = 2/3 \, (1/8 \, I_{out,0} + 1/4 \, I_{out,1} + 1/2 \, I_{out,2} + I_{out,3})$$

Le courant Iout est donc proportionnel à une somme des courants fournis aux quatre lignes collectrices, cette somme étant pondérée par des puissances successives de 2.

L'effet du deuxième réseau de résistances est donc de transformer quatre courants représentant chacun le centre de gravité de trois nombres binaires de un bit en un seul courant dont l'intensité représente le centre de gravité de trois nombres binaires de quatre bits.

C'est en raison de la linéarité de l'opérateur de centre de gravité que l'intensité du courant de sortie Iout fourni par le deuxième réseau de résistances est identique à celle qu'on obtiendrait en convertissant dans chaque règle le nombre binaire caractérisant la sortie de la règle en courant analogique et en déterminant ensuite le centre de gravité de ces courants analogiques.

Nous avons dit plus haut que chaque circuit diviseur de courant divisait le courant qu'il reçoit en quatre parts égales. Comme nous l'avons déjà dit, cela n'est vrai qu'à condition que les quatre lignes collectrices 25, 26, 27, 28 et la ligne "dump" 30 se trouvent toutes au même potentiel. Malheureusement, les lignes collectrices étant connectées aux entrées du deuxième réseau de résistances et ne conduisant, de plus, pas la même quantité de courant, elles ne se trouvent, en général, pas exactement au même potentiel.

Pour remédier au problème ci-dessus, il peut être intéressant d'intercaler un convoyeur de courant entre chaque ligne collectrice et l'entrée du deuxième réseau de résistances. Le principe de fonctionnement des convoyeurs de courant est connu de l'homme du métier mais on peut signaler, tout de même, qu'une description détaillée de ces éléments figure au chapitre 3 de l'ouvrage de C. Toumazou, F.J. Lidgey et D.G. Haigh; "Analog IC design: the current-mode approach" publié par Peter Peregrinus Ltd.; Londres; Royaume-Uni. Grâce à l'utilisation de convoyeurs de courant (non représentés sur les figures), les lignes collectrices sont maintenues à une terre virtuelle.

Au lieu d'avoir recours à des convoyeurs de courant, il est généralement plus simple de choisir une valeur R suffisamment petite pour les résistances du deuxième réseau de résistances (décrit en relation avec la figure 6), de manière à ce que la chute de tension dans le deuxième réseau de résistances puisse être négligée et que les lignes collectrices soient donc sensiblement à la masse.

La figure 7 représente un deuxième mode de réalisation d'un contrôleur à logique floue selon la présente invention. Ce deuxième mode de réalisation a recours à des transistors MOS en lieu et place des éléments résistifs du premier mode de réalisation. On obtient l'essentiel du schéma de la figure 7 en remplaçant chacune des conductances du schéma de la figure 3 par un transistor MOS conformément au principe de la pseudorésistivité. Pour plus de détails quant au comportement des pseudo-conductances de transistors interconnectés, on pourra se référer à l'article de E. Vittoz et X. Arreguit, "Linear networks based on transistors", Electronic Letters, 297, 29, (1993)

Pour ne pas surcharger le schéma, on n'a représenté à la figure 7 que les éléments de circuit nécessaires pour mettre en oeuvre une unique règle de comportement. De plus, seuls les éléments de circuit nécessaires pour évaluer une unique fonction d'appartenance, c'est à dire une unique condition de la règle, ont été représentés.

Le circuit de la figure 7 est subdivisé en cinq éléments de circuit ou modules. Ces modules sont référencés respectivement A, B, C, D et E et sont, chacun, délimités par un rectangle en traits interrompus sur le schéma.

Le module A comprend la source de courant. Cette source de courant peut être identique à celle du mode de réalisation de la figure 3. Ce module est unique, indépendamment du nombre de règles.

Le module B est un circuit d'évaluation d'une fonction d'appartenance ou, autrement dit, un circuit qui effectue une mesure du degré de similitude entre la valeur d'un signal d'entrée Vx et une valeur de référence $Vp_i$ donnée. La figure 7 ne représente qu'un seul circuit d'évaluation d'une fonction d'appartenance, mais il est clair qu'il doit y en avoir un pour chaque condition de chaque règle mise en oeuvre.

Le module C est formé de deux transistors en série qui, lorsqu'ils sont commandés par le module B, constituent ensemble un élément pseudo-résistif à conductance variable. La conductance du module C est nulle si la valeur du signal d'entrée est très différente de la valeur de référence, augmente continûment lorsque les deux valeurs se rapprochent et atteint une valeur maximale lorsque les deux valeurs sont identiques. La figure 7 ne représente qu'un seul élément pseudo-résistif à conductance variable. Il est, toutefois, clair qu'il y a un de ces éléments pour chaque circuit d'évaluation d'une fonction d'appartenance et que, de plus, ces éléments pseudo-résistifs forment un réseau. Le lecteur pourra se référer aux figures 3 et 4 pour déterminer comment les éléments pseudo-résistifs doivent être interconnectés.

Le module D est formé par quatre lignes collectrices, une ligne "dump" et un circuit à embranchements dont la fonction est de distribuer des parties du courant fourni par une des branches du réseau d'éléments pseudo-résistifs aux lignes collectrices. Le circuit du module D est identique à celui de la figure 5 dès l'instant où l'on remplace chacune des conductances de ce dernier circuit par un transistor MOS. On comprendra également que bien que le module D soit représenté comme ne comportant qu'un unique circuit à embranchements il en comporte en fait un par règle mise en oeuvre, c'est à dire un par branche du réseau pseudo-résistif.

Enfin, le module E formé par un circuit pour réaliser une somme de courants pondérée par des puissances de 2. Le circuit du module E est identique au réseau de résistances de la figure 6 dès l'instant où l'on remplace chacune des résistances de ce réseau par un transistor MOS (exceptées les deux résistances de valeur double qui sont, elles, remplacées par une paire de transistors MOS en série). On comprendra que le module E est, lui aussi, unique indépendamment du nombre de règles.

Comme déjà dit, le module référencé B est un circuit d'évaluation d'une fonction d'appartenance. Ce module comporte une source de courant référencée 41 qui alimente deux branches parallèles. Une première de ces branches comporte deux transistors en série référencés respectivement 43 et 47 et l'autre branche comporte deux autres transistors référencés respectivement 45 et 49.

La valeur d'entrée pour le circuit d'évaluation est une tension notée $V_x$ qui est fournie à la grille du transistor 43, tandis que la valeur de référence du circuit est une tension notée $V_{pi}$ qui est fournie à la grille du transistor 45. Le courant circulant dans chacune des deux branches différentielles présente une dépendance sigmoïdale de la tension différentielle appliquée.

On remarque de plus, sur la figure 7, que les grilles des deux transistors du module C sont respectivement reliées aux grilles des transistors 47 et 49. Dans ces conditions, pour autant que le courant fourni par le module A au module C soit suffisamment faible pour que les deux transistors du module C soient en faible inversion, la pseudo-conductance du module C atteint son maximum lorsque $V_x$ est égal à $V_{pi}$ et décroît vers zéro lorsque l'écart entre les deux grandeurs augmente. Pour plus de détails quant au comportement des pseudo-conductances de transistors interconnectés, on pourra se référer à l'article de E. Vittoz et X. Arreguit, "Linear networks based on transistors", Electronic Letters, 297, 29, (1993) déjà mentionné plus haut.

La pseudo-conductance des transistors du bloc D est déterminée par une tension de polarisation qui est notée Vbias1 et qui est délivrée par une source de tension référencée 51.

La pseudo-conductance des transistors du bloc E est déterminée par une tension de polarisation qui est notée Vbias2 et qui est délivrée par une source de tension référencée 53.

En choisissant judicieusement les valeurs des tensions de polarisation $V_{bias1}$ et $V_{bias2}$, il est possible de se passer des convoyeurs de courant qui ont été mentionnés en relation avec le mode de réalisation de la figure 3. En effet, alors qu'avec de vraies résistances il est nécessaire de maintenir toutes les lignes collectrices au même potentiel constant, avec des pseudo-résistances il suffit que les potentiels de ces lignes collectrices soient suffisamment faibles pour saturer les transistors du module D. Pour plus de détails sur le principe de pseudoterre lié aux pseudo-résistances, on pourra se référer à l'article déjà mentionné de E. Vittoz et X. Arreguit, "Linear networks based on transistors", Electronic Letters, 297, 29, (1993).

## Revendications

1. Contrôleur à logique floue de type analogique prévu pour, par la mise en oeuvre d'un ensemble de règles de comportement et en fonction des valeurs prises par un ensemble de variables d'entrée ($x_k$), fournir les valeurs d'un ensemble de variables de sortie ($y_j$), chacune desdites règles de comportement s'énonçant comme, d'une part, une conclusion consistant en l'association de valeurs prédéterminées ($a_{ij}$) avec au moins une partie desdites variables de sortie ($y_j$) et, d'autre part, une expression logique floue formée d'une ou de plusieurs conditions reliées entre elles par des opérateurs logiques, lesdites conditions consistant chacune en une relation d'ordre entre une desdites variables d'entrée ($x_k$) et une valeur de référence ($p_{ik}$), ledit contrôleur déterminant les valeurs ($I_{out}$) desdites variables de sortie ($y_j$) en combinant lesdites valeurs prédéterminées ($a_{ij}$) des conclusions des différentes règles, les valeurs prédéterminées ($a_{ij}$) de chacune desdites conclusions étant pondérées en tenant compte d'un degré de vérité global ($\mu_i$) de l'expression logique floue correspondante, ledit degré de vérité global étant déterminé par combinaison des degrés de vérité respectifs des conditions figurant dans ladite expression floue et ledit degré de vérité d'une condition étant maximum lorsque ladite condition est strictement vérifiée et nul lorsque ladite condition est considérée comme non vérifiée; ledit contrôleur comprenant :

   - des premiers moyens pour fournir pour chaque règle un courant ($I_i$) dont l'intensité est représentative du degré de vérité global ($\mu_i$) de l'expression logique floue de ladite règle, lesdits premiers moyens comprenant des bipôles résistifs constitués, chacun, d'un ensemble d'éléments résistifs interconectés en série et/ou en parallèle, la configuration des interconnexions desdits éléments résistifs dans un bipôle étant déterminée par la nature des opérateurs logiques ("ET","OU") présents dans l'expression logique floue de la règle associée audit bipôle, et des circuits d'évaluation du degré de vérité d'une condition (11,13), chacun desdits circuits d'évaluation étant prévu pour commander la conductance d'un desdits éléments résistifs, et
   - des deuxièmes moyens pour déterminer les valeurs desdites variables de sortie ($y_j$) à partir desdites intensités des courants ($I_i$) fournis par lesdits premiers moyens pour les différentes règles;
   ledit contrôleur étant **caractérisé en ce que** les premiers moyens comportent :
   - un réseau de bipôles résistifs en parallèle , ledit réseau étant disposé en série avec une source de courant (15) et chacun desdits bipôles étant associé à une desdites règles, les circuits d'évaluation, commandant la conductance des éléments résistifs de chaque bipôle, étant prévus de manière que les intensités relatives des courants ($I_i$) circulant dans les différentes branches (21,22,23) dudit réseau d'éléments résistifs reflètent la distribution des degrés de vérité globaux des différentes règles, et
   **en ce que** les deuxièmes moyens comportent :
   - un nombre donné N de lignes collectrices (25 à 28),
   - pour chaque règle, un circuit diviseur de courant (31, 32, 33) comportant ledit nombre donné N de bras, chacun desdits bras recevant une part égale du courant fourni par lesdits premiers moyens, et lesdits bras sélectionnés étant reliés, chacun, à une des lignes collectrices respectives, ladite sélection de bras exprimant lesdites valeurs prédéterminées ($a_{ij}$) figurant dans la conclusion de ladite règle.

2. Contrôleur à logique floue de type analogique prévu pour, par la mise en oeuvre d'un ensemble de règles de comportement et en fonction des valeurs prises par un ensemble de variables d'entrée ($x_k$), fournir les valeurs d'un ensemble de variables de sortie ($y_j$), chacune desdites règles de comportement s'énonçant comme, d'une part, une conclusion consistant en l'association de valeurs prédéterminées ($a_{ij}$) avec au moins une partie desdites variables de sortie ($y_j$) et, d'autre part, une expression logique floue formée d'une ou de plusieurs conditions reliées entre elles par des opérateurs logiques, lesdites conditions consistant, chacune, en une relation d'ordre entre une desdites variables d'entrée ($x_k$) et une valeur de référence ($p_{ik}$), ledit contrôleur déterminant les valeurs ($I_{out}$) desdites variables de sortie ($y_j$) en combinant lesdites valeurs prédéterminées ($a_{ij}$) des conclusions des différentes règles, les valeurs prédéterminées ($a_{ij}$) de chacune desdites conclusions étant pondérées en tenant compte d'un degré de vérité global ($\mu_i$) de l'expression logique floue correspondante, ledit degré de vérité global étant déterminé par combinaison des degrés de vérité respectifs des conditions figurant dans ladite expression floue et ledit degré de vérité d'une condition étant maximum lorsque ladite condition est strictement vérifiée et nul lorsque ladite condition est considérée comme non vérifiée; ledit contrôleur comprenant :

- des premiers moyens pour fournir pour chaque règle un courant ($I_i$) dont l'intensité est représentative du degré de vérité global ($\mu_i$) de l'expression logique floue de ladite règle, lesdits premiers moyens comprenant des bipôles résistifs constitués, chacun, d'un ensemble d'éléments résistifs interconectés en série et/ou en parallèle, la configuration des interconnexions desdits éléments résistifs dans un bipôle étant déterminée par la nature des opérateurs logiques ("ET","OU") présents dans l'expression logique floue de la règle associée audit bipôle, et des circuits d'évaluation du degré de vérité d'une condition (11,13), chacun desdits circuits d'évaluation étant prévu pour commander la conductance d'un desdits éléments résistifs, et
- des deuxièmes moyens pour déterminer les valeurs desdites variables de sortie ($y_j$) à partir desdites intensités des courants ($I_i$) fournis par lesdits premiers moyens pour les différentes règles;
  ledit contrôleur étant **caractérisé en ce que** les premiers moyens comportent :
- un réseau de bipôles résistifs en série, ledit réseau étant disposé en parallèle avec une source de tension et chacun desdits bipôles étant associé à une desdites règles, les circuits d'évaluation, commandant la conductance des éléments résistifs de chaque bipôle, étant prévus de manière que les valeurs relatives des tensions aux bornes des différentes branches (21,22,23) dudit réseau d'éléments résistifs reflètent - la distribution des degrés de vérité globaux des différentes règles, et
  **en ce que** les deuxièmes moyens comportent :
- un nombre donné N de lignes collectrices (25 à 28),
- pour chaque règle, un circuit diviseur de courant (31, 32, 33) comportant ledit nombre donné N de bras, chacun desdits bras recevant une part égale du courant fourni par lesdits premiers moyens, et lesdits bras sélectionnés étant reliés, chacun, à une des lignes collectrices respectives, ladite sélection de bras exprimant lesdites valeurs prédéterminées ($a_{ij}$) figurant dans la conclusion de ladite règle.

3. Contrôleur selon l'une des revendications 1 et 2, **caractérisé en ce que** lesdits deuxièmes moyens comprennent encore des moyens (35 à 40) pour réaliser une somme des courants conduits par au moins une partie desdites lignes collectrices, ladite somme étant une somme pondérée par des puissances de 2.

4. Contrôleur selon l'une des revendications 1 ou 2, **caracterisé en ce que** les bipôles résistifs sont des transistors MOS.

**Patentansprüche**

1. Steuereinheit mit unscharfer Logik des analogen Typs, die dazu vorgesehen ist, durch Anwenden einer Gesamtheit von Verhaltensregeln und in Abhängigkeit von Werten, die aus einer Gesamtheit ($x_k$) von Eingangsvariablen entnommen werden, die Werte einer Gesamtheit ($y_j$) von Ausgangsvariablen zu liefern, wobei jede dieser Verhaltensregeln einerseits als eine Schlußfolgerung, die in der Zuordnung von vorgegebenen Werten ($a_{ij}$) zu wenigstens einem Teil der Ausgangsvariablen ($y_j$) besteht, und andererseits als ein Ausdruck einer unscharfen Logik, der aus einer oder mehreren Bedingungen gebildet ist, die untereinander durch logische Operatoren verbunden sind, formuliert ist, wobei die Bedingungen jeweils aus einer Ordnungsrelation zwischen einer der Eingangsvariablen ($x_k$) und einem Referenzwert ($p_{ik}$) bestehen, wobei die Steuereinheit die Werte ($I_{out}$) der Ausgangsvariablen ($y_j$) bestimmt, indem sie die vorgegebenen Werte ($a_{ij}$) der Schlußfolgerungen unterschiedlicher Regeln kombiniert, wobei die vorgegebenen Werte ($a_{ij}$) jeder der Schlußfolgerungen unter Berücksichtigung eines globalen Wahrheitsgrades ($\mu_i$) des entsprechenden Ausdrucks mit unscharfer Logik gewichtet werden, wobei der globale Wahrheitsgrad durch Kombination jeweiliger Wahrheitsgrade von Bedingungen, die in dem unscharfen Ausdruck auftreten, bestimmt ist und der Wahrheitsgrad einer Bedingung maximal ist, wenn die Bedingung streng verifiziert ist, und null ist, wenn die Bedingung als nicht verifiziert betrachtet wird; wobei die Steuereinheit umfaßt:

- erste Mittel, die für jede Regel einen Strom ($I_i$) liefern, dessen Stärke den globalen Wahrheitsgrad ($\mu_i$) des Ausdrucks mit unscharfer Logik der Regel repräsentiert, wobei die ersten Mittel resistive Zweipole umfassen, die jeweils aus einer Gesamtheit von in Serie und/oder parallel verbundenen resistiven Elementen gebildet sind, wobei die Konfiguration der gegenseitigen Verbindungen der resistiven Elemente in einem Zweipol durch die Art der logischen Operatoren ("UND", "ODER") bestimmt ist, die in dem Ausdruck mit unscharfer Logik der dem Zweipol zugeordneten Regel vorhanden sind, und wobei die ersten Mittel Schaltungen für die Bewertung des Wahrheitsgrades einer Bedingung (11, 13) umfassen, wobei jede dieser Bewertungsschaltungen dazu vorgesehen ist, die Konduktanz eines der resistiven Elemente zu steuern, und

- zweite Mittel, die die Werte der Ausgangsvariablen ($y_j$) anhand der Stärken der Ströme ($I_j$), die von den ersten Mitteln für die verschiedenen Regeln geliefert werden, bestimmen;
  wobei die Steuereinheit **dadurch gekennzeichnet ist, daß** die ersten Mittel umfassen:
- ein Netzwerk aus parallelen resistiven Zweipolen, wobei das Netzwerk in Serie mit einer Stromquelle (15) angeordnet ist und wobei jedem der Zweipole eine Regel zugeordnet ist, wobei die Bewertungsschaltungen, die die Konduktanz der resistiven Elemente jedes Zweipols steuern, in der Weise beschaffen sind, daß die relativen Stärken der Ströme ($I_i$), die in den verschiedenen Zweigen (21, 22, 23) des Netzwerks aus resistiven Elementen fließen, die Verteilung der globalen Wahrheitsgrade der verschiedenen Regeln wiedergeben, und daß die zweiten Mittel umfassen:
- eine gegebene Anzahl N von Kollektorleitungen (25 bis 28),
- für jede Regel eine Stromteilerschaltung (31, 32, 33), die Zweige in der gegebenen Anzahl N enthält, wobei jeder der Zweige den gleichen Stromanteil empfängt, der von den ersten Mitteln geliefert wird, und wobei die ausgewählten Zweige jeweils mit einer der entsprechenden Kollektorleitungen verbunden sind,

wobei die Auswahl der Zweige die vorgegebenen Werte ($a_{ij}$), die in der Schlußfolgerung der Regel auftreten, wiedergibt.

2. Steuereinheit mit unscharfer Logik des analogen Typs, die dazu vorgesehen ist, durch Anwenden einer Gesamtheit von Verhaltensregeln und in Abhängigkeit von Werten, die aus einer Gesamtheit von Eingangsvariablen ($x_k$) entnommen werden, die Werte einer Gesamtheit von Ausgangsvariablen ($y_j$) zu liefern, wobei jede der Verhaltensregeln einerseits als eine Schlußfolgerung, die in der Zuordnung von vorgegebenen Werten ($a_{ij}$) zu wenigstens einem Teil der Ausgangsvariablen ($y_j$) besteht, und andererseits als ein Ausdruck mit unscharfer Logik, der aus einer oder mehreren Bedingungen gebildet ist, die untereinander durch logische Operatoren verbunden sind, formuliert ist, wobei die Bedingungen jeweils aus einer Ordnungsrelation zwischen einer der Eingangsvariablen ($x_k$) und einem Referenzwert ($p_{ik}$) bestehen, wobei die Steuereinheit die Werte ($I_{out}$) der Ausgangsvariablen ($y_j$) bestimmt, indem sie die vorgegebenen Werte ($a_{ij}$) der Schlußfolgerungen der verschiedenen Regeln kombiniert, wobei die vorgegebenen Werte ($a_{ij}$) jeder der Schlußfolgerungen durch Berücksichtigen eines globalen Wahrheitsgrades ($\mu_i$) des entsprechenden Ausdrucks mit unscharfer Logik gewichtet werden, wobei der globale Wahrheitsgrad durch Kombination entsprechender Wahrheitsgrade von Bedingungen bestimmt ist, die in dem unscharfen Ausdruck auftreten, und wobei der Wahrheitsgrad einer Bedingung maximal ist, wenn die Bedingung streng verifiziert ist, und null ist, wenn die Bedingung als nicht verifiziert betrachtet wird; wobei die Steuereinheit umfaßt:

- erste Mittel, die für jede Regel einen Strom ($I_i$) liefern, dessen Stärke den globalen Wahrheitsgrad ($\mu_i$) des Ausdrucks mit unscharfer Logik der Regel repräsentiert, wobei die ersten Mittel resistive Zweipole umfassen, die jeweils aus einer Gesamtheit von miteinander in Serie und/oder parallel verbundenen resistiven Elementen gebildet sind, wobei die Konfiguration der gegenseitigen Verbindungen der resistiven Elemente in einem Zweipol durch die Art der logischen Operatoren ("UND", "ODER"), die in dem Ausdruck mit unscharfer Logik der dem Zweipol zugeordneten Regel vorhanden sind, bestimmt ist und wobei die ersten Mittel Schaltungen für die Bewertung des Wahrheitsgrades einer Bedingung (11, 13) umfassen, wobei jede dieser Bewertungsschaltungen dazu vorgesehen ist, die Konduktanz eines der resistiven Elemente zu steuern, und
- zweite Mittel, die die Werte der Ausgangsvariablen ($y_j$) anhand der Stärken der Ströme ($I_i$), die von den ersten Mitteln für die verschiedenen Regeln geliefert werden, bestimmen;
  wobei die Steuereinheit **dadurch gekennzeichnet ist, daß** die ersten Mittel umfassen:
- ein Netzwerk aus in Serie geschalteten resistiven Zweipolen, wobei das Netzwerk mit einer Spannungsquelle parallelgeschaltet ist und wobei jeder der Zweipole einer der Regeln zugeordnet ist, wobei die Bewertungsschaltungen, die die Konduktanz der resistiven Elemente jedes Zweipols steuern, in der Weise beschaffen sind, daß die relativen Spannungswerte an den Anschlüssen der verschiedenen Zweige (21, 22, 23) des Netzwerks aus resistiven Elementen die Verteilung der globalen Wahrheitsgrade der verschiedenen Regeln wiedergeben und daß die zweiten Mittel umfassen:
- eine gegebene Anzahl N von Kollektorleitungen (25 bis 28),
- für jede Regel eine Stromteilerschaltung (31, 32, 33), die Zweige in der gegebenen Anzahl N enthält, wobei jeder der Zweige einen gleichen Stromanteil empfängt, der von den ersten Mitteln geliefert wird, und wobei die ausgewählten Zweige jeweils mit einer der entsprechenden Kollektorleitungen verbunden sind, wobei die Auswahl der Zweige die vorgegebenen Werte ($a_{ij}$), die in der Schlußfolgerung der Regel vorkommen, wiedergibt.

**3.** Steuereinheit nach einem der Ansprüche 1 und 2, **dadurch gekennzeichnet, daß** die zweiten Mittel weitere Mittel (35 bis 40) umfassen, die eine Summe von Strömen bilden, die von wenigstens einem Teil der Kollektorleitungen geleitet werden, wobei die Summe eine durch Potenzen von 2 gewichtete Summe ist.

**4.** Steuereinheit nach einem der Ansprüche 1 oder 2, **dadurch gekennzeichnet, daß** die resistiven Zweipole (MOS-Transistoren) sind.

**Claims**

**1.** Analog type fuzzy logic controller adapted to supply, by implementing a set of rules and as a function of the values from a set of input variables ($x_k$), the values of a set of output variables ($y_j$), each of said rules expressing itself as, on the one hand, a result consisting in the association of predetermined values ($a_{ij}$) with at least part of said output variables ($y_j$) and, on the other hand, a fuzzy logic expression composed of one or several conditions connected to each other by logic operators, said conditions each consisting of an expression involving one of said input variables ($x_k$) and a reference value ($p_{ik}$), said controller determining the values ($I_{out}$) of said output variables ($y_j$) by combining said predetermined values ($a_{ij}$) of the results of the various rules, the predetermined values ($a_{ij}$) of each of said results being weighted by taking into account an overall degree of truth ($\mu_i$) of the corresponding fuzzy logic expression, said overall degree of truth being determined by combining the respective degrees of truth of the conditions appearing in said fuzzy expression and said degree of truth of one condition being maximum when said condition is strictly verified and zero when said condition is considered as non-verified; said controller comprising:

- first means for supplying for each rule a current ($I_i$), the intensity of which is representative of the overall degree of truth ($\mu_i$) of the fuzzy logic expression of said rule, said first means comprising resistive bipoles each composed of a set of resistive elements interconnected in series and/or in parallel, the configuration of the interconnections of said resistive elements in a bipole being determined by the nature of the logic operators ("AND", "OR") present in the fuzzy logic expression of the rule associated with said bipole, and evaluation circuits of the degree of truth of a condition (11, 13), each of said evaluation circuits being adapted to control the conductance of one of said resistive elements, and

- second means for determining the values of said output variables ($y_j$) from said current intensities ($I_i$) supplied by said first means for the various rules;
  said controller being **characterised in that** said first means of said controller have :

- a network of parallel resistive bipoles, said network being disposed in series with a current source (15) and each of said bipoles being associated with one of said rules, the evaluation circuits, controlling the conductance of the resistive elements of each bipole, being adapted in such a way that the relative current intensities ($I_i$) circulating in the various branches (21, 22, 23) of said network of resistive elements reflect the distribution of the overall degrees of truth of the various rules, and
  **in that** the second means have :

- a given number N of collecting lines (25 to 28),
- for each rule, a current dividing circuit (31, 32, 33) having said given number N of branches, each of said branches receiving an equal share of the current supplied by said first means, and each of said selected branches being connected to one of said respective collecting lines, said selection of branches expressing said predetermined values ($a_{ij}$) appearing in the result of said rule.

**2.** Analog type fuzzy logic controller adapted to supply, by implementing a set of rules and as a function of the values from a set of input variables ($x_k$), the values of a set of output variables ($y_j$), each of said rules expressing itself as, on the one hand, a result consisting in the association of predetermined values ($a_{ij}$) with at least part of said output variables (yj) and, on the other hand, a fuzzy logic expression composed of one or several conditions connected to each other by logic operators, said conditions each consisting of an expression involving one of said input variables ($x_k$) and a reference value ($p_{ik}$), said controller determining the values ($I_{out}$) of said output variables ($y_j$) by combining said predetermined values ($a_{ij}$) of the results of the various rules, the predetermined values ($a_{ij}$) of each of said results being weighted by taking into account an overall degree of truth ($\mu_i$) of the corresponding fuzzy logic expression, said overall degree of truth being determined by combining the respective degrees of truth of the conditions appearing in said fuzzy expression and said degree of truth of one condition being maximum when said condition is strictly verified and zero when said condition is considered as non-verified; said controller comprising:

- first means for supplying for each rule a current ($I_i$), the intensity of which is representative of the overall degree of truth ($\mu_i$) of the fuzzy logic expression of said rule, said first means comprising resistive bipoles each composed of a set of resistive elements interconnected in series and/or in parallel, the configuration of the interconnections of said resistive elements in a bipole being determined by the nature of the logic operators ("AND", "OR") present in the fuzzy logic expression of the rule associated with said bipole, and evaluation circuits of the degree of truth of a condition (11, 13), each of said evaluation circuits being adapted to control the conductance of one of said resistive elements, and

- second means for determining the values of said output variables ($y_j$) from said current intensities ($I_i$) supplied by said first means for the various rules;

    said controller being **characterised in that** said first means of said controller have :

- a network of parallel resistive bipoles, said network being disposed in parallel with a voltage source and each of said bipoles being associated with one of said rules, the evaluation circuits, controlling the conductance of the resistive elements of each bipole, being adapted in such a way that the relative voltage values across the various branches (21, 22, 23) of said network of resistive elements reflect the distribution of the overall degrees of truth of the various rules, and

    **in that** the second means have :

- a given number N of collecting lines (25 to 28),

- for each rule, a current dividing circuit (31, 32, 33) having said given number N of branches, each of said branches receiving an equal share of the current supplied by said first means, and each of said selected branches being connected to one of said respective collecting lines, said selection of branches expressing said predetermined values ($a_{ij}$) appearing in the result of said rule.

3. Controller according to any one of claims 1 and 2, **characterised in that** said second means further comprise means (35 to 40) for realising a sum of currents conducted by at least part of said collecting lines, said sum being a sum weighted by successive powers of 2.

4. Controller according to any one of claims 1 and 2, **characterized in that** said resistive bipoles are MOS transistors.

Fig. 1A

Fig. 1B

Fig. 2

Fig. 3

**Fig. 4A**

**Fig. 4B**

**Fig. 5**

16

Fig. 6

Fig. 7